# FASCICULE DE BREVET EUROPEEN

(11) **EP 1 538 785 B1**
(45) Date de publication et mention de la délivrance du brevet: **09.08.2006**
(21) Numéro de dépôt: 04106206.8
(22) Date de dépôt: 01.12.2004
(51) Int. Cl.: H04L 12/40, B64D 43/00

(54) **Installation d'essais en vol commutée avec un format de données de type " paquet "**
Flugtestdatenvermittlungsanlage mit Paketformat
Flight test data switching system with packet data format

(30) Priorité: 03.12.2003 FR 0350960
(43) Date de publication de la demande: 08.06.2005
(73) Titulaire: AIRBUS France, 31060 Toulouse (FR)
(72) Inventeur: Mao, Jean-Pierre Résidence le Pré Saint Martin, 31300 Toulouse (FR); Caturla, Jean-Pascal, 31530 Montaigut (FR); Maether, Pascale, 31820 Pibrac (FR); Revaux, Nathalie, 31700 Blagnac (FR); Abadie, Frédéric, 31170 Tournefeuille (FR)
(74) Mandataire: Poulin, Gérard

(56) Documents cités:
- FR-A- 2 818 066
- FR-A- 2 837 296
- US-A- 2 502 215
- US-A- 5 218 863
- US-A- 6 134 485
- NEGRE Y, LAFOURCADE D: "Digital telemetry for real-time analysis of Airbus A320 flight test results" 18TH ANNUAL SYMPOSIUM OF THE SOCIETY OF FLIGHT TEST ENGINEERS, 1987, XP008032852 AMSTERDAM, NETHERLANDS
- MILLS H L, TURVER K D: "24-bit flight test data recording format" ITC USA '91 INTERNATIONAL TELEMETERING CONFERENCE, vol. 27, 1991, pages 385-389, XP008032841 LAS VEGAS, NEVADA, USA
- BLUE L D ET AL: "Development of the flight test telemetry system for Clipper Graham: a new way to do business" DIGITAL AVIONICS SYSTEMS CONFERENCE, 1997. 16TH DASC., AIAA/IEEE IRVINE, CA, USA 26-30 OCT. 1997, NEW YORK, NY, USA,IEEE, US, 26 octobre 1997 (1997-10-26), pages 8.1-27-8.1-34, XP010256110 ISBN: 0-7803-4150-3

## Description

### DOMAINE TECHNIQUE

La présente invention concerne une installation d'essais en vol commutée avec un format de données de type "paquet".

### ETAT DE LA TECHNIQUE ANTERIEURE

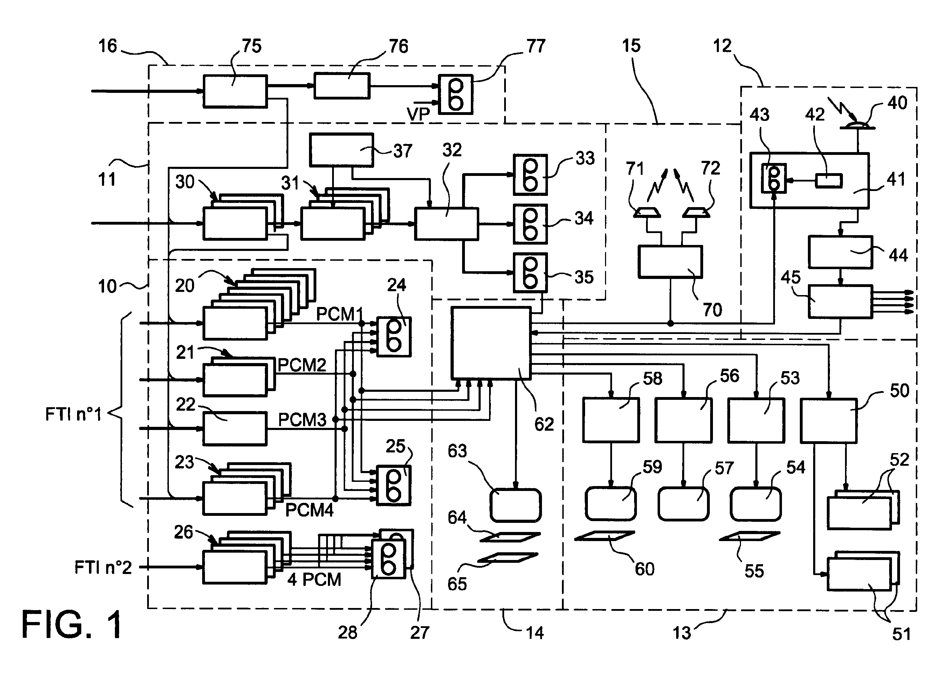

La figure 1 illustre une installation d'essais en vol (FTI) de l'art connu, une telle installation est aussi connue du document "Digital telemetry for real-time analysis of Airbus A320 flight test results" (NEGRE Y , LAFOURCADE D), 18th Annual Symposium of the Society of Flight Test Engineers, 1987, Amsterdam, The netherlands (XP 008032852). Celle-ci, comprend :
- une chaîne numérique 10,
- une chaîne analogique 11,
- une base de temps 12,
- une station d'essais en vol 13,
- un système d'alarme et de maintenance 14,
- un système de télémétrie 15,
- un système accident (« crash ») 16.

La chaîne numérique 10 comprend : 1) d'une part, reliés à des entrées FTI n° 1 (bus Arinc 429, CAN ("Controller Area Network"), RS232, RS422, discrets et mesures allant du continu à 100 Hz) :
- des premières unités 20 d'acquisition numérique PCM1 (« Pulse Code Message » ou « Modulation impulsions codées » numéro 1)
- des secondes unités 21 d'acquisition numérique PCM2,
- des troisièmes unités 22 d'acquisition numérique PCM3,
- des quatrièmes unités 23 d'acquisition numérique PCM4,
reliées à deux enregistreurs numériques 24 et 25, 2) d'autre part, reliées à des entrées FTI n° 2 :
- quatre unités d'acquisition numériques 26 reliées à deux enregistreurs numériques 27 et 28.

La chaîne analogique 11 comprend successivement :
- des unités de conditionnement 30 recevant des mesures analogiques allant du continu à 20 kHz,
- des unités de commutation 31,
- une unité de traitement de signal 32,
- trois enregistreurs analogiques 33, 34 et 35.

Elle comprend également une unité centrale de contrôle 37 étant reliée aux unités de commutation 31 et à l'unité de traitement de signal 32.

La base de temps 12 comprend :
- une antenne GPS (« Global Positionning System » ou « Système de Positionnement global ») 40,
- une unité GPS différentiel de trajectographie 41 comprenant un récepteur GPS 42 relié à un enregistreur 43,
- une horloge GPS 44,
- un générateur de base de temps 45 qui permet une datation de tous les équipements.

La station d'essais en vol 13 comprend :
- une unité de traitement de visualisation 50 reliée à des copieurs avec sortie papier 51, et des enregistreurs graphiques 52,
- une première unité de traitement 53 reliée à une unité d'affichage 54 et à un clavier 55,
- une unité de traitement de conditions de vol 56 reliée à une unité d'affichage 57,
- une seconde unité de traitement 58 reliée à une unité d'affichage 59, et à un clavier 60.

Le système d'alarme et de maintenance 14 comprend :
- une unité centrale 62 reliée notamment aux différentes unités de traitement 50, 53, 56 et 58, à un afficheur 63, à un clavier 64, et à une imprimante 65.

Le système de télémétrie 15 comprend :
- un émetteur 70 relié à des antennes 71 et 72 dirigées vers une station terrestre de télémétrie.

Le système accident 16 comprend successivement :
- une unité de conditionnement 75,
- une unité d'acquisition numérique 76,
- un enregistreur 77 qui enregistre aussi la voix du pilote VP.

Plus de 20 ans d'essais en vol ont conduit à modifier une telle installation d'essais en vol, pour arriver à des architectures modifiées complexes principalement construites en ajoutant des « briques » aux chaînes existantes. Dans de telles architectures, la manière sûre pour faire face aux nouveaux besoins était souvent de créer de nouvelles chaînes d'acquisition et d'enregistrement. Ceci a été notamment le cas avec la duplication de cette installation d'essais en vol pour réaliser une installation d'essais en vols d'un nouveau système de navigation, ou d'une chaîne spécifique large bande pour des mesures analogiques allant jusqu'à 20KHz.

La vraie limitation de telles architectures modifiées, si ce n'est un débit limité, réside dans la non-interconnectivité des différents équipements. Puisque le format de données n'est pas homogène, que les systèmes d'entrée/sortie fonctionnent en « Half Duplex » (ou « semi-duplex ») et que la plupart des connexions sont des connexions point à point, il n'est pas possible de fusionner ou d'échanger des données entre différents systèmes. De plus, les systèmes d'acquisition fournissent une liaison de sortie provenant du domaine télémétrie (modulation par impulsions codées) dont le principe est une transmission cyclique de tous les paramètres avion à un débit d'environ 800 kbits/s.

Une nécessaire évolution dans les principes de commutation de telles installations d'essais en vol est donc nécessaire pour tenir compte principalement :
- d'une augmentation constante du nombre et du débit des paramètres avion observés,
- du besoin de partager des données entre des systèmes d'enregistrement, des unités de traitement des essais en vol, de la télémétrie...,
- du besoin de fusionner des données provenant de différents domaines, et souvent de systèmes d'acquisition différents : entrées standard, entrées analogiques large bande, entrées discrètes, fonctionnement en « Full Duplex » (« duplex intégral »)...,
- d'une recherche constante de réduction de coût dans la certification d'avion, impliquant le choix de technologies largement utilisées pour réduire les coûts de développement et de maintenance.

Dans les installations d'essais en vol de l'art connu ces phénomènes ont été notamment résolus, comme cela a été dit ci-dessus,en dupliquant les chaînes d'acquisitions et d'enregistrement, ou en mettant en oeuvre des installations spécifiques.

L'invention a pour objet d'intégrer les multiples environnements de telles architectures en une architecture unique, en fusionnant physiquement les données provenant de n'importe quel système d'acquisition vers un ou plusieurs systèmes d'enregistrement et d'analyse, et en standardisant le format de données utilisé parmi tous les environnements d'acquisition et d'exploitation.

### EXPOSÉ DE L'INVENTION

L'invention concerne une installation d'essais en vol commutée, qui a une architecture basée sur quatre niveaux de données :
- un premier niveau, ou niveau capteur, dans lequel est réalisé la conversion de données d'une entrée physique en un paramètre électrique mesurable,
- un second niveau, ou niveau acquisition, dans lequel est réalisé l'acquisition analogique, discret, ou bus numérique,
- un troisième niveau, ou niveau de concentration,
- un quatrième niveau ou niveau d'enregistrement et d'analyse,
caractérisée en ce que le troisième niveau est un niveau où sont rassemblés les flux de données provenant de tous les systèmes du second niveau vers les systèmes du quatrième niveau, les données n'étant pas modifiées à travers ce troisième niveau, les seules fonctions étant des aiguillages et des duplications de trames incidentes.

Avantageusement les systèmes du second niveau réalisent notamment les tâches suivantes :
- pour des entrées numériques : contrôle de capteur, filtrage analogique, échantillonnage de données et conversion analogique-numérique, fonctions mathématiques limitées...
- pour des entrées numériques : tri d'étiquettes, filtrage,
- pour toutes les entrées : marquage du temps en fonction de la synchronisation globale, mise en forme de données en paquets, tri de paquets vers leurs destinations.

Avantageusement les fonctions du troisième niveau sont réalisées par des commutateurs Ethernet. Les systèmes du quatrième niveau sont des systèmes bord abonnés au flux des paramètres avions tels que :
- stockage de données de masse pour une analyse ultérieure à terre,
- réalisation d'un pré-traitement par les unités de traitement à bord et affichage pour des ingénieurs d'essais en vol,
- télémétrie.

Avantageusement l'installation de l'invention comprend une base de donnée, dans laquelle la configuration de chaque système est prévue, qui gère chaque système, et qui décrit l'évolution de chaque paramètre avion.

Avantageusement un paquet de données est considéré comme la combinaison de deux principales structures optimisées :
- un champ « entête » qui contient les données nécessaires utilisées par ladite installation pour porter les informations aux bons récepteurs,
- un champ « paramètres » qui est un ensemble de paramètres que l'installation produit et transmet aux récepteurs à travers le réseau.

Ce paquet comprend également :
- un champ « fin de paquet ».

Avantageusement le champ « entête » comprend :
1) un champ « clé », qui identifie le paquet,
2) un champ « taille », qui donne la longueur de paquet,
3) un champ « datation », qui donne l'étiquetage temps de valeur de création du paquet,
4) un champ « état » ("status") en anglais), qui comprend :
   - un status clé,
   - un status équipement,
5) un champ « numéro de séquence ».

Le champ paramètre peut comprendre :
a) un champ identification, qui identifie le paramètre dans un paquet,
b) un champ délai, qui détermine le délai entre le moment de création de paquet et le moment d'acquisition de paramètre,
c) un champ de données, qui est dédié à porter soit un paramètre acquis soit un paramètre interne.

Le champ paramètre peut être de deux types « standard » ou « message ».

Le champ paramètre peut également comprendre :
a) un champ identification, qui identifie un paramètre dans un paquet,
b) un champ de longueur, qui détermine la taille du paramètre de type « message »,
c) un champ délai, qui donne le temps entre la création d'un paquet et la donnée acquise,
d) un champ de données, qui est dédié pour porter soit un paramètre acquis, soit un paramètre interne.

L'installation d'essais en vol de l'invention présente les avantages suivants :
- une grande flexibilité, puisque n'importe quel système du second et du quatrième niveaux peut être ajouté ou enlevé sans autre modification que le câblage et/ou la configuration de commutation du troisième niveau,
- un partage de données entre les chaînes de base, large bande, et accident, alors que les architectures de l'art connu fonctionnent indépendamment,
- un téléchargement central pour tous les systèmes des second, troisième et quatrième niveaux ce qui réduit le temps de traitement avant les essais en vol,
- une réduction de coût en intégrant des systèmes "sur étagère" dans l'environnement essais en vol,
- une réduction de coût de maintenance en utilisant des outils existants, largement utilisés dans le domaine des réseaux et des télécommunications.

### BRÈVE DESCRIPTION DES DESSINS

La figure 1 illustre une installation d'essais en vol de l'art connu.
La figure 2 illustre l'installation d'essais en vol commutée de l'invention.
Les figures 3 à 6 illustrent un exemple de format de paquet de données utilisé dans l'installation d'essais en vol de l'invention.

### EXPOSÉ DÉTAILLÉ DE MODES DE RÉALISATION PARTICULIERS

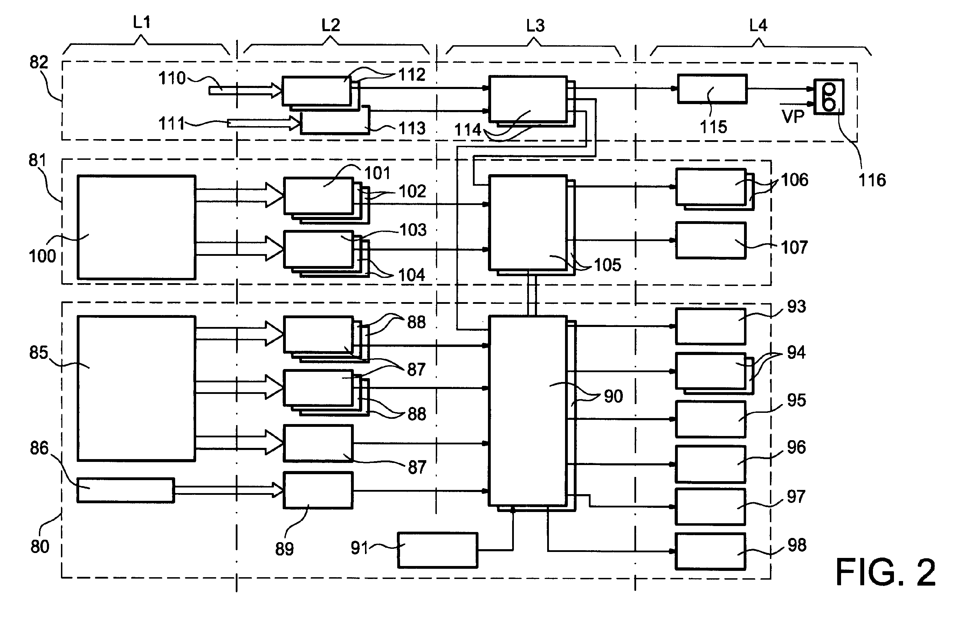

Comme illustrée sur la figure 2, l'architecture de l'installation d'essai en vol commutée de l'invention est basée sur quatre niveaux de traitement de données :
- un premier niveau (L1), ou niveau capteur,
- un second niveau (L2), ou niveau acquisition,
- un troisième niveau (L3), ou niveau de concentration,
- un quatrième niveau (L4), ou niveau d'enregistrement et d'analyse.

Dans le premier niveau est réalisé la conversion d'une grandeur physique (pression, température, force...) en une grandeur électrique mesurable : tension ou courant. Certains systèmes de ce niveau L1 peuvent intégrer une partie de fonctions du second niveau L2, telles que : filtrage, conversion analogique-numérique...

Les systèmes du second niveau concernent l'acquisition analogique, numérique, discrète. Ces systèmes réalisent notamment les tâches suivantes :
- pour des entrées numériques : contrôle de capteur, filtrage analogique, échantillonnage de données et conversion analogique-numérique, fonctions mathématiques limitées...,
- pour des entrées numériques : tri d'étiquettes, filtrage,
   - pour toutes les entrées : marquage du temps en fonction de la synchronisation globale, mise en forme de données en paquets, tri de paquets vers leurs destinations (groupes du quatrième niveau).

Le troisième niveau est le niveau spécifique de l'invention, où sont rassemblés les flux de données provenant de tous les systèmes du second niveau L2 vers les systèmes du quatrième niveau L4. Il n'y a aucune modification de la donnée à travers ce troisième niveau. Les seules fonctions sont des aiguillages et des duplications des trames incidentes qui sont réalisées par des commutateurs Ethernet standard.

Les systèmes du quatrième niveau sont des systèmes bord abonnés au flux des paramètres avion, tels que :
- stockage de données de masse pour une analyse ultérieure au sol,
- réalisation d'un pré-traitement par les unités de traitement d'essais à bord et affichage pour les ingénieurs d'essais en vol,
- télémétrie.

Une base de données de test en vol, dans laquelle la configuration de chaque système est prévue, gère tous les systèmes de l'installation d'essais en vol. Cette base de données décrit l'évolution de chaque paramètre avion du tout début de sa vie (phénomène physique) à son stockage en paquets.

Comme illustrée sur la figure 2, l'installation d'essais en vol commutée de l'invention comprend :
- une chaîne de base 80,
- une chaîne large bande 81,
- une chaîne accident 82.

La chaîne de base 80 comprend :
- au premier niveau L1 :
   - la mesure de paramètres en 85,
   - l'arrivée de bus « full duplex » en 86,
- au second niveau L2 :
   - des premières unités d'acquisition maîtres 87 et esclaves 88,
   - des secondes unités d'acquisition 89, qui sortent sur des liaisons Ethernet,
- au troisième niveau L3 :
   - des unités de commutation 90 qui reçoivent un chargement de configuration 91 et qui sortent sur des liaisons Ethernet,
- au quatrième niveau L4 :
   - un processeur de télémétrie 93,
   - des enregistreurs de données de masse 94,
   - plusieurs unités de traitement 95 à 98.

La chaîne large bande 81 comprend :
- au premier niveau L1 :
   - la mesure de paramètres large bande 100,
- au second niveau L2 :
   - des premières unités d'acquisition maître 101 et esclaves 102,
   - des secondes unités d'acquisition maître 103 et esclaves 104,
- au troisième niveau L3 :
   - des unités de commutation 105 qui sortent sur des liaisons Ethernet,
- au quatrième niveau L4 :
   - des enregistreurs de données de masse 106,
   - une unité de traitement 107.

La chaîne accident 82 comprend :
- au premier niveau L1 :
   - la mesure de paramètres « accident » 110,
   - l'arrivée de bus « Full Duplex » 111,
- au second niveau L2 :
   - des premières unités d'acquisition 112,
   - des secondes unités d'acquisition 113,
- au troisième niveau L3 :
   - des unités de commutation 114,
- au quatrième niveau L4 :
   - une unité 115 interface Ethernet/ARINC 573 reliée à un enregistreur 116, qui reçoit également la voix du pilote VP.

Le troisième niveau L3 constitue le véritable centre de la communication de l'installation de l'invention. L'interconnexion entre les premier et quatrième niveaux est assuré au travers d'un réseau local (LAN ou « Local Area Network) Ethernet commuté. Les commutateurs de ce troisième niveau L3 permettent l'acheminement de flux de données provenant de différents émetteurs vers un ou plusieurs récepteurs, en les dupliquant si nécessaire. Ces commutateurs permettent aussi le partage de données entre les trois chaînes d'essais en vol : à savoir la chaîne de base 80, la chaîne large bande 81 et la chaîne accident 82.

Le réseau local est construit autour d'une architecture « Full Duplex » (ou « duplex intégral ») 100 Mbit/s Ethernet utilisant des commutateurs disponibles, ou « sur étagère » (COTS ou « Components of the Shelf »).

Deux modes de fonctionnement, correspondant aux différents flux de données sont permis par ce réseau :

### 1) mode acquisition

Le mode acquisition est le mode de fonctionnement par défaut. Chaque système au démarrage est capable de traiter des données acquises.

Le flux principal du mode acquisition consiste en des paquets véhiculant des paramètres avion, allant des unités du second niveau aux unités du quatrième niveau. Un tel traffic est basé sur une communication « multicast », qui correspond à plusieurs destinataires. Une telle communication « multicast » permet à une unité du second niveau d'envoyer les données qu'elle a acquises à plusieurs unités du quatrième niveau. Des échanges point-à-point en mode d'acquisition sont, si nécessaire, aussi réalisés en commutation « multicast ».

Un plan d'adressage Ethernet « multicast » définit des « groupes de destination multicast » que les récepteurs du quatrième niveau prennent en compte dans leurs enregistrements. Ces adresses Ethernet « multicast » sont obtenues à partir d'un sous-réseau IP classe D (tranche d'adresses particulière) privé, le dernier octet étant le numéro de groupe de destination « multicast ».

La table de groupes de destination « multicast » est statique, identique pour tous les avions et définie de manière exhaustive dans la base de donnée.

Un exemple en est donné dans le tableau suivant.

| | **Numéros de groupe de destination « multicast »** | **Adresse Ethernet « multicast » correspondante** |
|---|---|---|
| **Paramètres vers niveau L4 de chaîne de base** | GR10 | 235.1.1.10 |
| **Paramètres vers niveau L4 de chaîne large bande** | GR20 | 235.1.1.20 |
| **Paramètres vers niveau L4 de chaîne accident** | GR30 | 235.1.1.30 |
| **Paramètres vers niveau L4 de chaîne de base + chaîne large bande** | GR12 | 235.1.1.12 |
| **Paramètres vers niveau L4 de chaîne de base + chaîne accident** | GR13 | 235.1.1.13 |
| **Paramètres vers niveau L4 de** | GR23 | 235.1.1.23 |
| **chaîne large bande + chaîne accident** | | |
| **Paramètres vers chaîne de base + chaîne large bande + chaîne accident** | GR123 | 235.1.1.123 |

La table de commutation du troisième niveau L3 est alors générée automatiquement en fonction du câblage des récepteurs sur ses ports de sortie. Cette table contient des adresses MAC « Média Access Control » ou adressage physique « multicast », la conversion des adresses IP aux adrsses MAC étant conforme au standard « multicast ».

### 2) mode téléchargement

La commutation d'un système des second, troisième et quatrième niveaux en mode téléchargement est réalisée sur la requête de l'utilisateur, pendant le fonctionnement au sol. Puisque tous les systèmes fonctionnent indépendamment, les traffics d'acquisition et de téléchargement peuvent exister concurremment sur le réseau local.

Le flux principal en mode téléchargement consiste en des fichiers de configuration provenant d'un chargeur de données vers chacun des second, troisième et quatrième niveaux. Chaque fournisseur de système est libre de choisir son propre protocole Ethernet standard pour le téléchargement. Ce peut être par exemple les protocoles TFTP (« Trivial File Transfer Protocol ») ou « Protocole de transfert de fichier trivial »), FTP (« File Transfer Protocol ») ou TCP (« transmission control Protocol »)-IP. Des sessions de téléchargement multiples peuvent être supportés au même moment.

Ces échanges ne nécessitent pas un adressage « multicast », mais un adressage « unicast » (un seul destinataire), standard au niveau Ethernet. Ces adresses Ethernet sont prises d'un sous-réseau Ethernet classe B (tranche d'adresses particulière), les deux derniers octets étant dépendants du type et du numéro d'avion, du type et de la position du système. La table d'adressage « unicast » est statique pour un avion donné, et définie de manière exhaustive dans la base de donnée.

Les systèmes des second, troisième et quatrième niveaux peuvent recevoir le protocole de résolution d'adresse (ARP ou « Address Resolution Protocol ») pour résoudre l'identification Ethernet à IP dans le mode de téléchargement. Chaque commutateur du troisième niveau utilise aussi un apprentissage automatique à partir de trames qui le traversent, pour construire sa table de commutation MAC « unicast ».

Les caractéristiques spécifiques de l'installation d'essais en vol de l'invention sont ainsi les suivantes :
- Communication « multicast » statique : comme décrit précédemment le réseau local se base largement sur un adressage « multicast », qui peut être trouvé dans plusieurs applications industrielles, mais plus rarement dans une configuration statique. On évite un adressage « multicast » dynamique utilisant un protocole de gestion de groupe Ethernet (IGMP ou « Internet Group Management Protocol »), en utilisant quelques systèmes du second niveau de technologie de faible niveau (sans processeur ou système opérateur). Un adressage « multicast » statique aide à réduire le traffic dommageable du protocole de gestion de groupe Ethernet, ce qui est toujours préférable pour des applications temps réel embarquées telles que des applications essais en vol.
- Désactivation de protocoles dynamiques : même si quelques protocoles dynamiques sont nécessaires pour un bon comportement du réseau local, une recherche constante est effectuée pour essayer de réduire ce type de traffic et ainsi éviter de perturber le transfert de paquets. Le protocole de gestion de groupe Ethernet (IGMP), le protocole en arbre courant (STP ou « Spanning Tree Protocole »), les protocoles privés sont ainsi interdits dans le réseau local. Les seuls protocoles « extra » (non-classiques) supportés par le réseau sont le protocole de résolution d'adresse pour le mode téléchargement et le protocole de message de contrôle Ethernet (ICMP ou « Internet Control Message Protocol ») utilisés à des fins de mise au point.
- Configuration de l'adresse Ethernet (« Pin Programming ») : pour éviter une programmation fastidieuse à bord de l'avion, la plupart des systèmes du second niveau intègrent des broches dont on a codé directement l'adresse. Cette programmation permet à des systèmes d'être reconnus automatiquement sur le réseau local, puis d'être téléchargés au travers du réseau.
- Redondance réseau : classiquement dans une installation d'essai en vol, la mémoire de masse du quatrième niveau est dupliquée pour faciliter une analyse de données et surtout pour sécuriser ladite installation. Une telle redondance peut être étendue aisément au réseau lui-même. Par exemple les systèmes des second et quatrième niveaux peuvent intégrer des entrées/sorties Ethernet redondantes. Les systèmes du troisième niveau peuvent être doublés : Les deux troisièmes niveaux ainsi définis peuvent alors supporter une même table de commutation, les flux de données étant complètement identiques sur les deux réseaux.
- Liaisons physiques : la même couche physique est choisie pour le réseau local. Les équipement standard des troisième et quatrième niveau sont particularisés pour supporter les connecteurs et les câbles d'une avionique fonctionnant en « full duplex ». Le câblage de l'installation est donc identique à celui des systèmes avion, ce qui facilite le travail de câblage dans les lignes d'assemblage de l'avion.

### Exemple de format paquet de données utilisé dans l'installation de l'invention

Ce format a pour objectif de transporter toutes les mesures fournies par les équipements d'essais en vol avec un étiquetage de temps précis et des données minimum.

Ce format est basé sur les principes suivants :
- l'installation d'essais en vol de l'invention fournit une base de temps unique (GPS ou interne) pour les systèmes d'acquisition et d'enregistrement. Tous les moyens d'essais (en vol, à terre et externes) sont synchronisés avec la même source de temps. Un paramètre est horodaté avec le moment de sa création,
- les données sont traitées soit de manière continue (fréquence d'échantillonnage ou cycle répétitif) soit sur un événement asynchrone,
- les moyens d'installation d'essais et les outils d'exploitation de décodeur ont un seul format de données.

Les différents champs d'un tel format vont être mis en évidence ci-dessous.

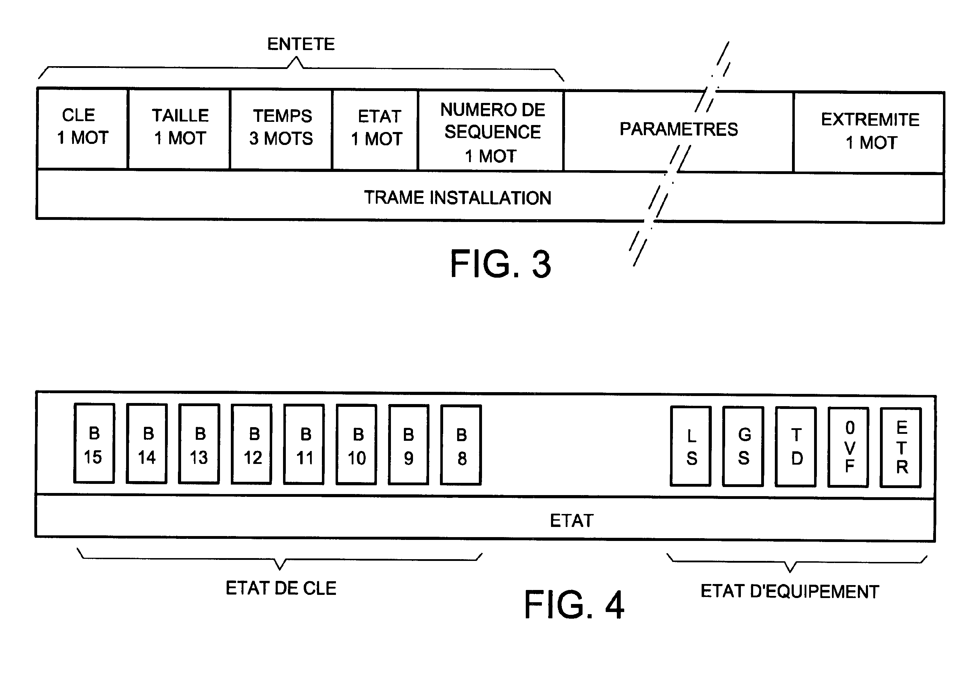

Un paquet de données peut être considéré comme la combinaison de deux principales structures optimisées, illustrées sur la figure 3 :
- un champ « entête » (« header ») qui contient les données nécessaires utilisées par l'installation d'essais en vol de l'invention pour porter les informations aux bons récepteurs. Ces structures sont complètement décrites dans les bases de données de chaque équipement. Ce champ "entête" contient sept mots de 16 bits,
- un champ « paramètres » qui est un ensemble de paramètres que le système produit et transmet aux récepteurs à travers le réseau.

Il comprend de plus :
- un champ « fin de paquet » . : ce champ est un champ obligatoire. La valeur par défaut donnée par la base de données est OXDEAD.

Le champ « entête » comprend :
1) un champ « clé » (1 mot), qui identifie le paquet. Ce champ est utilisé pour sélectionner un groupe ou une famille de paramètres. Une clé peut ainsi grouper des paramètres analogiques (par exemple température, jauge de pression...) avec une fréquence donnée d'acquisition d'échantillon,
2) un champ « taille » (1 mot), qui donne la longueur de paquet en un mot de 16 bits. La taille est calculée du champ clé jusqu'au champ « extrémité »,
3) un champ « datation » (3 mots), qui donne la date de création du paquet. Il représente le nombre de microsecondes depuis le premier janvier de l'année en cours,
4) un champ « status » (1 mot), illustré sur la figure 4, qui comprend :
   a) un status clé, qui comprend :
      - un sélecteur de clé statique B15, pour lequel :
         - « 1 » signifie clé statique,
         - « 0 » signifie pas clé statique.
            (Les bits d'état statiques donnés par une base de données sont fixés par les équipements d'essais. Ces bits sont définis pour chaque clé. Une clé statique contient seulement des paramètres synchrones (produit avec une fréquence d'échantillonage synchrone). L'agencement dans la clé statique est toujours le même).
      - Un sélecteur de paramètre B14 pour les unités de traitement bord, pour lequel :
         - « 1 » signifie ignoré,
         - « 0 » signifie calculé,
      - une structure de clé de message B13, pour laquelle :
         - « 1 » signifie structure de clé de type « message »,
         - « 0 » signifie structure de clé de type « standard »,
      - un sélecteur de champ « délai » B12, pour lequel :
         - « 1 » signifie champ « délai » utilisé pour tous les paramètres portés dans une clé,
         - « 0 » signifie champ « délai » pas utilisé pour tous les paramètres portés dans une clé.
      - des données B11 transmises par l'ordinateur de test à bord, pour lesquelles :
         - « 1 » signifie ordinateur d'essais bord produit des paramètres pour un autre équipement de test,
         - « 0 » signifie autre cas,
      - une table de clé standard B10-B8, qui donne la taille (en mots) pour tous les paramètres dans la clé,
   b) un status équipement, qui est mis à jour par les différents moyens d'essais qui produisent des données. Il reflète l'état de la clé dédiée. La signification de chaque bit est donnée ci-dessous :
      - ETR reflète l'état en temps réel,
      - OVF indique une erreur de débordement
      - TD, pour lequel :
         - « 0 » signifie que les paramètres sont produits par les systèmes d'acquisition,
         - « 1 » signifie que les paramètres sont produits par l'ordinateur bord « télémétrie ».
      - GS, ou état de synchronisation global, pour lequel :
         - « 1 » signifie synchronisation perdue,
         - « 0 » signifie bonne synchronisation.
      - LS, ou état de synchronisation local, pour lequel :
         - « 1 » signifie synchronisation perdue
         - « 0 » signifie bonne synchronisation.
5) Un champ « numéro de séquence » (« Seq Num ») (1 mot) : chaque clé a son propre compteur de numéro de séquence qui doit être incrémenté avant chaque création de clé. C'est un compteur circulaire 16 bits. Ce champ est contrôlé par tous les décodeurs de paquet pour surveiller les paquets perdus dans le réseau.

Le champ « paramètres » est un ensemble de paramètres qu'un système de l'installation produit et transmet aux récepteurs à travers le réseau. Un paramètre est identifié par le champ identification (ID). Il contient des données utiles ou des mesures.

Un « paramètre standard » est utilisé pour porter des paramètres analogique, discret ou bus numérique.

Le « paramètre message » est utilisé pour porter des paramètres de trames de bus (RS 232/422/485, ARINC429, AFDX, CAN...).

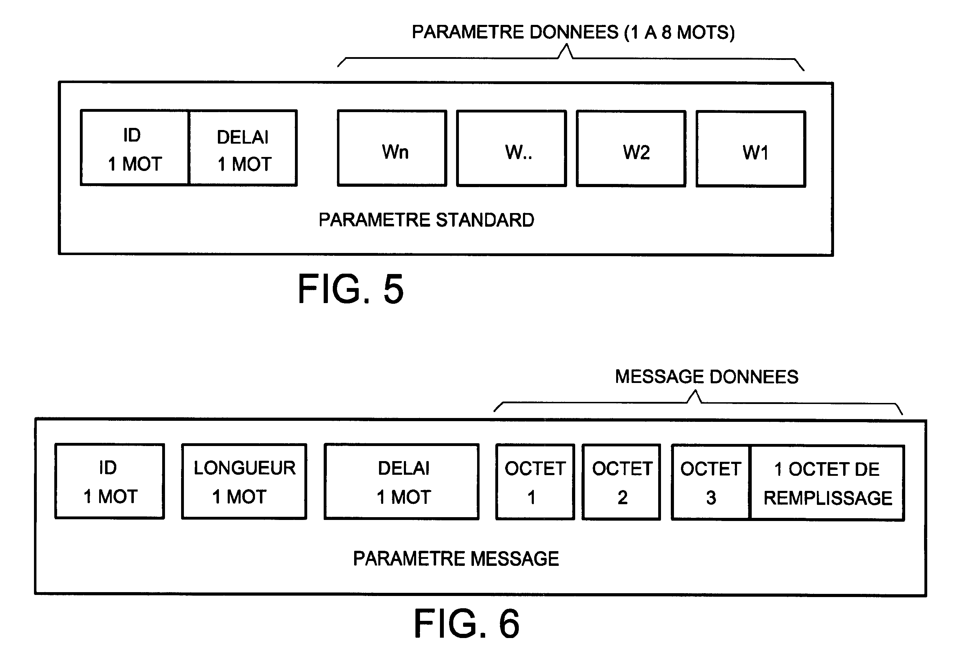

La structure générale du paramètre standard est illustrée sur la figure 5, avec :
a) un champ identification ou ID (1 mot), qui identifie un paramètre dans un paquet. C'est un champ optionnel. Cette structure est définie par la base de données. Ce champ est unique dans toutes les versions de programmation de l'installation de test,
b) un champ délai (1 mot), qui détermine le délai (en microsecondes) entre le moment de création de paquet et le moment d'acquisition de paramètre. Les valeurs permises sont comprises entre 0 et 65535 µs. L'étiquette temps paramètre est égale au moment de création de paquet additionné au délai paramètre. C'est un champ optionnel qui est défini par la base de données.
c) un champ de données (1 à 8 mots), qui est dédié à porter soit un paramètre acquis soit un paramètre interne. C'est un champ obligatoire. Le nombre de mots qui constitue la donnée est donné par la base de données.

La structure générale du paramètre message est illustrée sur la figure 5, avec :
a) un champ identification ou ID (1 mot), qui identifie un paramètre dans un paquet. Ce champ est obligatoire et unique dans toutes les versions de programmation de l'installation de test,
b) un champ de longueur (1 mot), qui détermine la taille du paramètre de données en octets en excluant l'octet de remplissage. Ce champ est obligatoire,
c) un champ délai (1 mot), qui donne le temps entre la création d'un paquet et la donnée acquise, et qui est optionnel,
d) un champ de données (plusieurs octets), qui est dédié pour porter soit un paramètre acquis, soit un paramètre interne. C'est un champ obligatoire. Toutes les données sont justifiées. Un octet de remplissage est ajouté à la fin de ce champ lorsque la longueur n'est pas alignée sur 16 bits.

## Revendications

1. Installation d'essais en vol commutée, qui a une architecture basée sur quatre niveaux de données :
- un premier niveau (L1), ou niveau capteur, dans lequel est réalisé la conversion de données d'une entrée physique en un paramètre électrique mesurable,
- un second niveau (L2), ou niveau acquisition, dans lequel est réalisé l'acquisition analogique, discret, ou bus numérique,
- un troisième niveau (L3), ou niveau de concentration,
- un quatrième niveau (L4) ou niveau d'enregistrement et d'analyse,
**caractérisée en ce que** le troisième niveau est un niveau où sont rassemblés les flux de données provenant de tous les systèmes du second niveau (L2) vers les systèmes du quatrième niveau (L4), les données n'étant pas modifiées à travers ce troisième niveau, les seules fonctions étant des aiguillages et des duplications de trames incidentes.

2. Installation selon la revendication 1, dans lequel les systèmes du second niveau (L2) réalisent les tâches suivantes :
- pour des entrées numériques : contrôle de capteur, filtrage analogique, échantillonnage de données et conversion analogique-numérique, fonctions mathématiques limitées...
- pour des entrées numériques : tri d'étiquettes, filtrage,
- pour toutes les entrées : marquage du temps en fonction de la synchronisation globale, mise en forme de données en paquets, tri de paquets vers leurs destinations.

3. Installation selon la revendication 1, dans lequel les fonctions du troisième niveau (L3) sont réalisées par des commutateurs Ethernet.

4. Installation selon la revendication 1, dans lequel les systèmes du quatrième niveau (L4) sont des systèmes bord abonnés au flux des paramètres avions tels que :
- stockage de données de masse pour une analyse ultérieure à terre,
- réalisation d'un pré-traitement par les unités de traitement à bord et affichage pour des ingénieurs d'essais en vol,
- télémétrie.

5. Installation selon la revendication 1 comprenant une base de donnée, dans laquelle la configuration de chaque système est prévue, qui gère chaque système, et qui décrit l'évolution de chaque paramètre avion.

6. Installation selon la revendication 1, dans laquelle un paquet de données est considéré comme la combinaison de deux principales structures optimisées :
- un champ « entête », qui contient les données nécessaires utilisées par ladite installation pour porter les informations aux récepteurs.
- un champ « paramètres », qui est un ensemble de paramètres que l'installation produit et transmet aux récepteurs à travers le réseau.

7. Installation selon la revendication 6, qui comprend :
- un champ « fin de paquet ».

8. Installation selon la revendication 6, dans laquelle le champ « entête » comprend :
1) un champ « clé », qui identifie le paquet,
2) un champ « taille », qui donne la longueur de paquet,
3) un champ « datation », qui donne l'étiquetage temps de valeur de création du paquet,
4) un champ « status », qui comprend :
- un status clé,
- un status équipement,
5) un champ « numéro de séquence ».

9. Installation selon la revendication 6 dans laquelle le champ paramètres « standard » comprend :
a) un champ identification, qui identifie un paramètre dans un paquet,
b) un champ délai, qui détermine le délai entre le moment de création de paquet et le moment d'acquisition de paramètre,
c) un champ de données, qui est dédié à porter soit un paramètre acquis soit un paramètre interne.

10. Installation selon la revendication 6, dans laquelle le champ paramètres « message » comprend :
a) un champ identification, qui identifie un paramètre dans un paquet,
b) un champ de longueur, qui détermine la taille du paramètre de données,
c) un champ délai, qui donne le temps entre la création d'un paquet et la donnée acquise,
d) un champ de données, qui est dédié pour porter soit un paramètre acquis, soit un paramètre interne.

## Claims

1. Switched flight test installation with an architecture based on four data levels:
- a first level (L1), or sensor level, in which the data are converted from a physical input into a measurable electrical parameter,
- a second level (L2), or acquisition level, in which the analogue, discrete or digital bus acquisition is made,
- a third level (L3), or concentration level,
- a fourth level (L4) or recording and analysis level,
**characterized in that** the third level is a level carrying data streams from all second level (L2) systems to fourth level (L4), systems, the data not being modified as they pass through this third level, the only functions being switchings and duplications of incident frames.

2. Installation according to claim 1, in which second level (L2) systems perform the following tasks:
- for digital inputs: sensor control, analogue filtering, data sampling and analogue-digital conversion, limited mathematical functions, etc.
- for digital inputs: label sorts, filtering,
- for all inputs: marking of time as a function of global synchronization, formatting of data in packets, sorting of packets to their destinations.

3. Installation according to claim 1, in which third level (L3) functions are performed by Ethernet switches.

4. Installation according to claim 1, in which fourth level (L4) systems are onboard systems subscribing to the stream of aircraft parameters such as:
- mass data storage for subsequent analysis on the ground,
- preprocessing by onboard processing units and display for flight test engineers,
- telemetry.

5. Installation according to claim 1 comprising a database containing the configuration of each system, and that manages each system and describes the variation of each aircraft parameter.

6. Installation according to claim 1, in which a data packet is considered as being the combination of two main optimized structures:
- a «header» field that contains the necessary data used by the said installation to carry information to receivers;
- a «parameters» field that is a set of parameters that the installation produces and transmits to receivers through the network.

7. Installation according to claim 6, comprising:
- an «end of packet» field.

8. Installation according to claim 6, in which the «header» field comprises:
1) a «key» field that identifies the packet,
2) a «size» field that gives the length of the packet,
3) a «dating» field that contains the official packet creation time label,
4) a «status» field, that comprises:
- a key status,
- an equipment status,
5) a «sequence number» field.

9. Installation according to claim 6 in which the «standard» parameter field comprises:
a) an identification field that identifies a parameter in a packet,
b) a delay field that determines the delay between the packet creation time and the parameter acquisition time,
c) a data field dedicated to carrying either an acquired parameter or an internal parameter.

10. Installation according to claim 6, in which the «message» parameter field comprises:
a) an identification field that identifies a parameter in a packet,
b) a length field, that determines the size of the data parameter,
c) a delay field that gives the time between when a packet is created and when data are acquired,
d) a data field dedicated to carrying either an acquired parameter, or an internal parameter.

## Patentansprüche

1. Umschaltbare Flugtestanlage, die eine auf vier Datenebenen basierende Architektur aufweist:
- einer ersten Ebene (L1) oder Messfühlerebene, in der die Datenumwandlung aus einer physikalischen Eingabe in einen messbaren elektrischen Parameter durchgeführt wird,
- einer zweiten Ebene (L2) oder Erfassungsebene, in der die analoge Erfassung, die diskrete Erfassung oder die Erfassung über einen numerischen Bus erfolgt,
- einer dritten Ebene (L3) oder Konzentrationsebene,
- einer vierten Ebene (L4) oderf Aufzeichnungs- und Analyseebene,
**dadurch gekennzeichnet, dass** die dritte Ebene eine Ebene ist, auf der die von allen Systemen der zweiten Ebene (L2) kommenden Datenflüsse zu den Systemen der vierten Ebene (L4) gesammelt bzw. zusammengefasst werden, wobei die Daten über diese dritte Ebene nicht modifiziert werden und die einzigen Funktionen die der Weichenstellungen und der Duplikationen ankommender Frames sind.

2. Anlage nach Anspruch 1, wobei die Systeme der zweiten Ebene (L2) die folgenden Aufgaben ausführen:
- für numerische Eingaben: Messfühlersteuerung, analoge Filterung, Datenabtastung und Analog-/Digital-Umwandlung, begrenzte mathematische Funktionen ...
- für digitale Eingaben: Etikettensortierung, Filterung,
- für alle Eingaben: Markierung der Zeit in Abhängigkeit von der globalen Synchronisierung, Datenformgebung in Paketen, Paketsortierung zu deren Bestimmungsorten hin.

3. Anlage nach Anspruch 1, wobei die Funktionen der dritten Ebene (L3) durch Ethernet-Schalter durchgeführt werden.

4. Anlage nach Anspruch 1, wobei die Systeme des vierten Niveaus (L4) Bordsysteme sind, die an den Flugzeug-Parameterfluss angebunden sind, wie z.B.:
- Massendatenspeicherung für eine spätere Analyse am Boden,
- Ausführung einer Vorverarbeitung durch Bord-Verarbeitungseinheiten und Anzeige für Flugtestingenieure,
- Telemetrie.

5. Anlage nach Anspruch 1 mit einer Datenbank, in der die Konfiguration jedes Systems vorgesehen ist, welche jedes System verwaltet und die Entwicklung jedes Flugzeugparameters beschreibt.

6. Anlage nach Anspruch 1, wobei ein Datenpaket als Kombination von zwei optimierten Hauptstrukturen betrachtet wird:
- ein "Header"-Feld, welches notwendige Daten enthält, die für die Anlage verwendet werden, um die Informationen zu den Empfängern zu übertragen,
- ein "Parameter"-Feld, das eine Einheit von Parametern ist, welche die Anlage erzeugt und an die Empfänger über das Netz überträgt.

7. Anlage nach Anspruch 6, die umfasst:
- ein "Paketende"-Feld.

8. Anlage nach Anspruch 6, wobei das "Header"-Feld umfasst:
1) ein "Schlüssel"-Feld, welches das Paket identifiziert,
2) ein "Größen"-Feld, welches die Länge des Pakets angibt,
3) ein "Datierungs"-Feld, welches die Zeitkennzeichnung der Paketerzeugungsgröße angibt,
4) ein "Status"-Feld, das umfasst:
- einen Schlüsselstatus,
- einen Ausrüstungsstatus,
5) ein "Sequenznummern"-Feld.

9. Anlage nach Anspruch 6, wobei das "Standard"-Parameterfeld umfasst:
a) ein Identifikationsfeld, welches einen Parameter in einem Paket identifiziert,
b) ein Verzögerungsfeld, welches die Verzögerung zwischen dem Moment der Paketerzeugung und dem Moment der Parametererfassung bestimmt,
c) ein Datenfeld, das dazu bestimmt ist, entweder einen erfassten Parameter oder einen internen Parameter aufzunehmen.

10. Anlage nach Anspruch 6, wobei das "Nachrichten"-Parameterfeld umfasst:
a) ein Identifikationsfeld, welches einen Parameter in einem Paket identifiziert,
b) ein Längenfeld, welches die Größe des Datenparameters bestimmt,
c) ein Verzögerungsfeld, welches die Zeit zwischen der Erzeugung eines Pakets und den erfassten Daten angibt,
d) ein Datenfeld, das dazu bestimmt ist, entweder einen erfassten Parameter oder einen internen Parameter aufzunehmen.
